# EUROPEAN PATENT APPLICATION

(11) **EP 4 039 530 A1**
(43) Date of publication of application: **10.08.2022**
(21) Application number: 21191283.7
(22) Date of filing: 13.08.2021
(51) Int. Cl.: B60L 53/53, B60L 53/57, B60L 53/10, B60L 53/22, B60L 53/16

(54) **PORTABLE CHARGING DEVICE FOR ELECTRIC VEHICLE**

(30) Priority: 09.02.2021 ES 202130241 U
(71) Applicant: Justiniano Cespedes, Deiby Daniel, 48007 Bilbao, Vizcaya (ES); Justiniano Cespedes, Anthony Benjamin, 48007 Bilbao, Vizcaya (ES)
(72) Inventor: Justiniano Cespedes, Deiby Daniel, 48007 Bilbao, Vizcaya (ES); Justiniano Cespedes, Anthony Benjamin, 48007 Bilbao, Vizcaya (ES)
(74) Representative: Ungria López, Javier

(57) **Abstract**

The invention comprises at least an storage module (1) of direct current energy, and a charging module (2), configured to connect to the battery charging system of a vehicle and charge it from the energy stored in the storage module; wherein the different modules are joined to form a vertical alignment, by way of a tower, by means of mechanical connectors and by means of electrical connectors. It enables vehicles to be charged in any place that is required, and especially in areas where there are no charging points or where it is difficult to implement charging points. It can also be applied to perform roadside assistance, or to increase the autonomy of electric vehicles.

## Description

### Object of the invention

The present invention relates to a portable charging device for an electric vehicle the object of which is to provide a modular device, the modules of which are selected and assembled according to the charges that are to be supplied, enabling the configuration of the device to be established based on the application for which it is intended.

The charger falls within the automotive sector, specifically aimed at charging any type of electric vehicle, whether industrially or privately, to enable vehicles to be charged in any place that is required, and especially in areas where there are no charging points or where it is difficult to implement charging points.

It can also be applied to perform roadside assistance, or to increase the autonomy of electric vehicles.

### Background of the invention

Currently, the international economy, shaped by the philosophy of large multinationals, has taken a turn towards decarbonisation in its production, logistics and distribution processes. These multinationals have included this purpose as a main concept in the development of their strategic plans.

Not only product and service companies, but also energy companies or consumer goods companies are implementing these new objectives in their short and medium-term development plans. Even large oil corporations have already started looking for new business and investment niches away from raw materials coming from hydrocarbons. Among them, investment in renewable energy and green hydrogen plants stand out.

Similarly, the governments of leading countries have taken important steps towards decarbonising their economies. Along these lines, the main governments of the European Union have approved plans to ban the sale and circulation of diesel vehicles before 2030.

In this context, personal mobility acquires a relevant weight given that it is estimated that 60% of total CO₂ emissions into the atmosphere come from private vehicles.

For this reason, the electric vehicle industry is being promoted, but despite this, the total share of electric vehicles in relation to the total existing mobile fleet in countries with the largest implementation does not reach 1.5%, which is due to various reasons, among which it is worth noting the scarce existence of quick charging points, the lack of roadside assistance, the scarce existence of specialised workshops, etc.

The device of the invention was born with the aim of covering the current market need derived from the underdevelopment of the electrical infrastructures necessary for the correct implementation of the electric vehicle sector in society, and is especially oriented towards the entire range of vehicles and the entire range of drivers.

The invention provides a solution to the problem of accessibility to the electrical energy necessary for the partial or total charge of the batteries of an electric vehicle. The charger of the invention is the equivalent of a charging point for electric vehicles, but with the feature of being portable and adaptable to the specific needs of the vehicle and the situation. The charging device provides the possibility of transporting the electrical energy necessary for the operation of a vehicle, supplying a charge that is a function of the charging capacity with which the device is equipped, such as, for example, a charging supply close to a complete battery in low/medium-end vehicles or a quarter battery in high-end vehicles.

### Description of the invention

To achieve the objectives and solve the aforementioned problems, the invention provides a portable charging device for an electric vehicle, which at least comprises a storage module of direct current energy, and a charging module, configured to connect to the battery charging system of a vehicle, to charge it from the energy stored in the storage module. The different modules are joined to form a vertical alignment, by way of a tower, by means of mechanical connectors and by means of electrical connectors.

The charging module comprises a current inverter for converting the direct current stored in the storage module to alternating current, for the case in which it is required to connect it to a battery charging system of a vehicle in alternating current in order to charge it.

In addition, it is intended that the charging module comprises a current converter, configured to raise the level of the direct current stored in the storage module, for the case in which it is required to connect it to a battery charging system of a vehicle in direct current, and as long as the batteries of the vehicle have a direct voltage higher than that of the storage module. In the case in which the direct current stored in the storage module is equal to the charging current of the batteries of the vehicle, obviously this current converter is not necessary since the charge from the storage module can be applied directly to the vehicle from the storage module, by means of the charging module.

The charging module can be equipped with both the current inverter and the current converter, to obtain a very versatile charging module that can be used in any application, or on the contrary, it can only include one of these elements, according to the application for which it is intended, such that the cost and weight thereof is reduced.

Furthermore, it is envisaged that the device may comprise a recharging module for the storage module. This recharging module is configured to connect to either a standard single-phase domestic electrical grid or to a three-phase industrial grid. For this, the recharging module is equipped with a rectifier for converting the value of the alternating voltage of the electrical grid to which it is to be connected to the level of direct voltage of the storage module, and it comprises a hose with an electrical connector adapted to perform the connection thereof with the corresponding electrical grid, as well as the corresponding electrical connector for connecting with the charging and storage modules. The recharging module can be configured either to be used without being part of the tower, or to be part of it. In the latter case, the recharging module is also equipped with a mechanical connector, for joining it to one of the storage or charging modules.

The recharging module can comprise one or more rectifiers depending on the grid or grids to which connection is desired, providing a versatile configuration applicable in any application. In the case that it is to be used in a specific application, a single rectifier will be used so that the weight and cost thereof are reduced.

To rule the operation of the device, the charging module is equipped with an information display and control panel, which also constitutes an interface with the user, to which it shows the different events of the operation thereof, such as indicators of the charge of the storage module.

The information display and control panel of the charging module further comprises a conventional access control card.

It has been envisaged that the charging module and the recharging module comprise electrical protections such as protections against a possible excessive discharge of the batteries or protections by means of a BMS (battery management system).

In the preferred embodiment, the mechanical and electrical connectors of each module are arranged facing the respective connectors thereof of an adjoining module, to facilitate the location and assembly of the modules according to the vertical alignment by way of a tower. They are also quick-type connectors to reduce assembly time.

The different modules described are equipped with small wheels and an extendable handle, so that the independent portability of each module, or the portability of the joined modules forming the tower, is facilitated by means of the grip of the module located on the upper portion of the tower and by means of the wheels of the module located at the lower portion.

The mechanical connectors used can be of different types, such as pressure, clamp, magnetic connectors, or with a mechanical pin the movement of which enables the connection/disconnection between modules.

The electrical connectors can also be of different types, such as male/female connectors, plug-in clamp connectors, wired connectors, and Harting plug-in connectors with safety slide or harness.

Furthermore, each connector comprises a conventional anti-access protection.

In the preferred embodiment of the invention, the energy storage module comprises a plurality of direct current batteries, made up of blocks of ringed cells, wherein the batteries are 51 Vdc or 400 Vdc.

It is envisaged that the energy storage module can be constituted by a plurality of energy storage modules, connected in parallel mode, by means of quick connectors, the number of modules of which is a function of the power to be delivered. The storage modules can further incorporate the mechanical connectors described above to join them securely.

The modularity described enables the device to be configured exclusively for the real needs of the user and the situation thereof. In this way, the transfer of more weight than required for the situation is avoided, as well as the purchase of more modules than necessary, also reducing the acquisition cost thereof.

The configuration described enables the device to be able to carry out a quick charge, be portable, configurable, scalable, and that the modules can be interchangeable by means of quick connections.

### Description of the figures

To complete the description, and for the purpose of helping to make the features of the invention more readily understandable, this specification is accompanied by a set of figures constituting an integral part of the same, which by way of illustration and not limitation represents the following:
Figure 1 shows a diagram of a possible exemplary embodiment of the device of the invention for the case wherein the batteries of the storage module have a voltage of 51 Vdc.
Figure 2 shows a diagram of another possible exemplary embodiment of the device of the invention for the case wherein the batteries of the storage module have a voltage of 400 Vdc.

### Preferred embodiment of the invention

The invention is described below based on the previously mentioned figures.

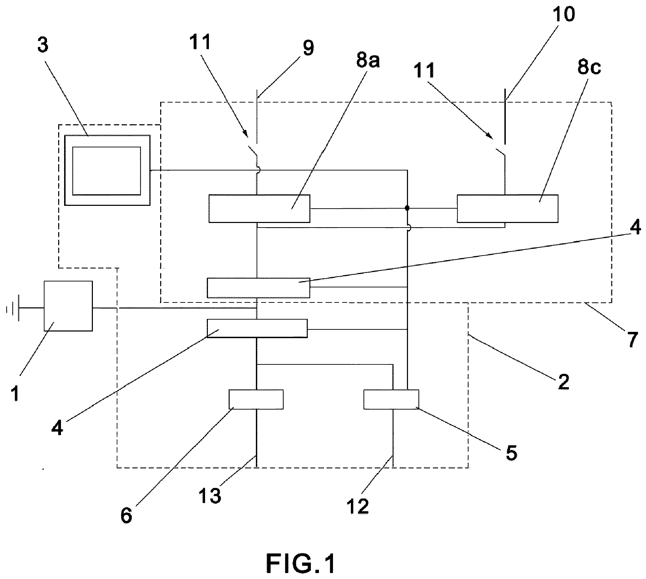

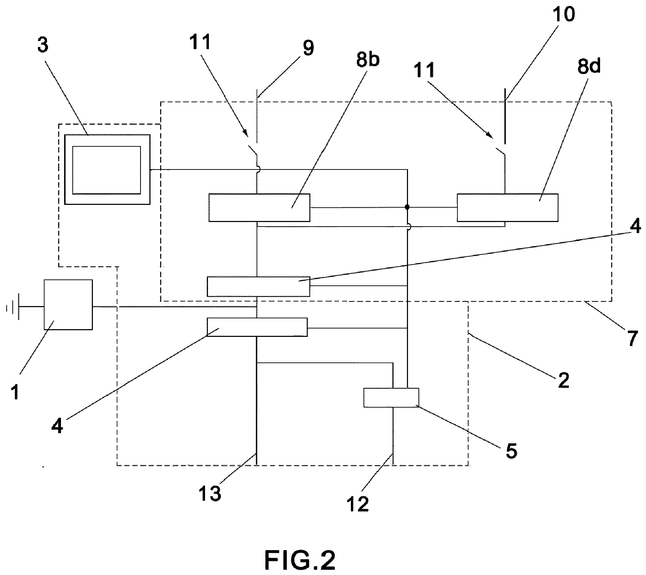

Figure 1 shows a first exemplary embodiment wherein the device comprises a storage module 1, the function of which is to store the energy that will be transported to charge the batteries of a vehicle. For this, the storage module is equipped with a plurality of direct current batteries, arranged in blocks of ringed cells, to obtain a power, for example between 2 and 5 kW. In the example of Figure 1, the batteries have a voltage of 51 Vdc, and in the example of Figure 2 they have a voltage of 400 Vdc, since both are usually the most widely used voltages in the state of the art, that of 51 Vdc being the most common. It is envisaged that the storage module can be constituted by a plurality of storage modules, which are connected in parallel mode by means of quick connectors to achieve combined powers, for example between 16 and 30 kW or greater. In any case, the power will be selected according to the features of the batteries of the vehicles to be charged. Storage modules can also be joined by means of quick mechanical connectors, just like the other modules in the device, as described below.

Furthermore, the device comprises a charging module 2, which constitutes the means by means of which the batteries of a vehicle are charged from the energy stored in the storage modules 1. For this, the charging module 2 comprises a hose, which is equipped with a connector (not shown) to make the connection with an electric vehicle and thus enable the batteries of the vehicle to be charged, as will be described.

The charging module 2 comprises an information display and control panel 3, through which the operation of the device is ruled and the different events of the operation thereof are displayed. To do this, said control panel 3 includes the different usage indicators, on and off pushbuttons, card access control modules, an HMI or LCD data display screen, charge indicators and the conventional controls necessary for charging.

Furthermore, the charging module 2 comprises electrical protections 4, determined by protections against excessive discharge of the batteries of the storage module 1, or, where appropriate, BMS (battery management system) protections.

Two variants of the charging module are envisaged, one that enables the charging of vehicle batteries in alternating current and another one in direct current, in such a way that it makes it possible to cover the different possibilities of charging vehicles of the state of the art. In one embodiment of the invention, the charging module only integrates one of the two variants depending on the features of the vehicles, so that the charging module adapts to the needs of each application. In this way, the transfer of more weight than required for the situation is avoided, as well as the purchase of more modules than necessary, also reducing the acquisition cost thereof.

In another embodiment of the invention, the possibility that the charging module is equipped with the two variants is contemplated, as is the case shown in the figures, wherein the selection of one or the other charging module is made by means of the information display and control panel 3.

In the first alternative, the charging module 2 comprises a current inverter 5 by means of which the direct current stored in the batteries of the module 1 is converted to alternating current, the output 12 of which is connected to the connection hose, which by means of the connector thereof will be connected to vehicles of the type that are equipped with an alternating current charging system, with a power comprised, for example, between 16 and 30 Kw.

In Figure 1 the inverter converts the direct voltage from 51 Vdc to 400 Vac and in Figure 2 it converts the direct voltage from 400 Vdc to 400 Vac, such that three-phase quick charging is enabled, depending on the features of the batteries finally supplied in the storage module.

The connection between the electric vehicle and the inverter 5 is made by means of the hose with a "Mennekes" type connector.

The second alternative of the charging module, by means of which the vehicle batteries are charged in direct current, and in the case of Figure 1 wherein the batteries of the charging module 1 are 51 Vdc, said charging module 2 comprises a current converter 6 that raises the voltage from 51 Vdc to 400 Vdc, the output 13 of which is connected to the connection hose, which by means of the connector thereof will be connected to vehicles of the type that are equipped with a direct current charging system, to enable the quick charging thereof. In the case of Figure 2, this converter is not necessary since the batteries of the storage module 1 provide the 400 Vdc voltage directly. In this second alternative, the hose connector is of the "CSS Combo IEC 62196-3" type.

It should be mentioned that in the two described alternatives of the charging module 2, it is envisaged that it comprises safety and communication systems for charging connections of electric vehicles, according to current regulations.

Moreover, it should be noted that in the two variants, the charging module is equipped with an extendable grip and small wheels (not shown) so that the transport thereof is facilitated.

Furthermore, the possibility is envisaged that the device can be equipped with a recharging module 7, of which two variants are also envisaged; a "domestic" one, by means of the connection in alternating current to the standard urban electrical grid 9, of 230 Vac, from which the recharging of the batteries of the storage module 1 is enabled, and an industrial one by means of the connection in alternating current to the three-phase electrical grid 10, 400 Vac, which enables the quick recharge in direct current from the three-phase electrical grid. For this, the recharging module 7 must be connected to the grid by means of a hose with the corresponding connector, as indicated below. The connection of the recharging module 7 to the corresponding grid 9 and 10 is made by means of a current protection element 11, for example a protection of 16 amps for the grid 9 and 32 amps for the grid 10, to protect it against a possible overcurrent.

In the first alternative and when the voltage of the batteries of the storage module is 51 Vdc (Figure 1), the recharging module comprises a rectifier 8a for converting the value of the alternating voltage of the electrical grid 9, of 230 Vac, to the direct voltage level of 51 Vdc, and when the voltage of the batteries of the storage module is 400 Vdc (Figure 2), it comprises a rectifier 8b for converting the alternating voltage of the electrical grid 9 to the direct voltage level of 400 Vdc.

In the second alternative and when the voltage of the batteries of the storage module is 51 Vdc, the recharging module comprises a rectifier 8c (Figure 1) for converting the value of the alternating voltage of the three-phase electrical grid of 400 Vac to the direct voltage level of 51 Vdc, and when the voltage of the batteries of the storage module is 400 Vdc (Figure 2), it comprises a rectifier 8d for converting the value of the alternating voltage of the three-phase electrical grid of 400 Vac to the direct voltage level of 400 Vdc.

The connector used to connect the rectifiers 8a and 8b, of the first alternative, to the domestic grid is known as "Schuko", and the connector for connecting the rectifiers 8c and 8d, of the second alternative, to the industrial grid is known as "IEC 60309".

Furthermore, the recharging module 7 further comprises electrical protections 4, determined by protections against excessive discharge of the batteries of the storage module 1, or, where appropriate, BMS (battery management system) protections.

The recharging module 7 is also equipped with security and communication systems for charging connections for electric vehicles, according to current regulations.

Also, it should be noted that the recharging module is equipped with an extendable grip and small wheels (not shown) to facilitate the transport thereof.

The different modules described are arranged inside insulated plastic-type (PVC or similar), lightweight and individually portable enclosures, so that they have also been designed with the same or similar shape and size, in which the weight has been regularly distributed between all of them to facilitate the transport and use of each one. The preferred design thereof is cubic or similar.

In addition, the necessary space has been provided for the correct ventilation of electronic components and equipment, as well as slots with filters to prevent the entry of harmful particles inside each module for this purpose. In cases where the design requires it, forced ventilation elements powered by means of auxiliary electrical supplies internally generated by the charger itself will be included.

The different modules are arranged vertically aligned, according to a configuration by way of a tower, installing each module one on top of the other by means of quick electrical and mechanical connectors. These connectors are provided in the upper and lower portions of each one of the central modules of the alignment, and only in the lower portion of the upper module, and in the upper portion of the lower module.

In the preferred embodiment, the charging module is arranged in the upper portion of the tower, the storage modules are assembled in the middle portion, below the charging module, and finally, the recharging module is installed in the lower portion of the tower. The possibility that the recharging module can be located externally to the tower configuration is also envisaged.

The modules comprise two types of connectors, some mechanical, and others electrical, both arranged facing the respective ones thereof of the adjoining modules, to enable the connection thereof quickly and easily, forming the vertical alignment, by way of a tower, in such a way that they provide the necessary stability in the joining of the modules. Each quick connector is covered with anti-access protections.

The mechanical connectors used can be any of those known in the state of the art, such as mechanical pressure connectors, in which the insertion of one connector into another is carried out by applying pressure, so that both modules are joined, and the separation of which is carried out by means of a pushbutton, which carries out said separation of the modules by pressure, or mechanical connectors with a manually movable closure, which blocks the joining between the connectors, or mechanical clamp connectors, which also perform the joining/separation by applying pressure, or magnetic connectors, or harness connectors by means of which both connectors are embraced and assembled, or mechanical connectors with a slide the movement of which blocks the joining of both modules, and the separation of which is carried out by moving the slide in the opposite direction to that of blocking.

Similarly, the electrical connectors can also be any of those conventionally used, for example, plug-in connectors by applying pressure, such as male and female connectors, or clamp connectors, or wired connectors, which enable greater connection flexibility, or male and female connectors with safety slide or "harness", known as Harting connectors, which require closing the connection by moving a slide or "harness", or industrial male and female connectors.

Ultimately, the configuration described enables the device to be designed according to the application for which it is intended, enabling the configuration of the device to be established by assembling the modules that are necessary, which are selected according to the charges that are to be supplied, as specified.

## Claims

1. A portable charging device for electric vehicles, at least comprising:
- a storage module (1) of direct current energy, and
- a charging module (2), configured to connect to the battery charging system of a vehicle, and to charge it from the energy stored in the storage module,
- wherein the different modules are joined to form a vertical alignment, by way of a tower, by means of mechanical connectors and by means of electrical connectors.

2. Device, according to claim 1, wherein the charging module comprises a current inverter (5) for converting the direct current stored in the storage module to alternating current, to connect it to a battery charging system of a vehicle in alternating current.

3. Device, according to any one of the preceding claims, wherein the charging module comprises a current converter (6), which raises the level of direct current stored in the storage module, to connect it to a battery charging system of a vehicle in direct current, the batteries of which have a direct voltage higher than that of the storage module.

4. Device, according to any one of the preceding claims, comprising a recharging module (7) of the storage module, which is configured to connect to an electrical grid selected from a single-phase domestic grid (9) and a three-phase industrial grid (10).

5. Device, according to claim 4, wherein the recharging module comprises a rectifier (8a, 8b, 8c, 8d) for converting the value of the alternating voltage of the electrical grid to the direct voltage level of the storage module.

6. Device, according to any one of the preceding claims, wherein the charging module comprises an information display and control panel (3).

7. Device, according to claim 6, wherein the information display and control panel comprises an access control card and indicators of the charge of the storage module.

8. Device, according to any one of the preceding claims, wherein the charging module and the recharging module comprise electrical protections (4) selected from protections against excessive discharge of the batteries and protections by means of a BMS (battery management system).

9. Device, according to any one of the preceding claims, wherein the different modules comprise wheels and an extendable handle.

10. Device, according to claim 1, wherein the mechanical connectors of each module and the electrical connectors of each module are arranged facing each other.

11. Device, according to claim 10, wherein the mechanical connectors are selected from pressure, clamp, magnetic, and mechanical pin connectors.

12. Device, according to claim 10, wherein the electrical connectors are selected from male/female connectors, plug-in clamp connectors, wired connectors, and Harting plug-in connectors with a safety slide or harness.

13. Device, according to any one of claims 10 to 12, wherein each connector comprises an anti-access protection.

14. Device, according to any one of the preceding claims, wherein the energy storage module comprises a plurality of direct current batteries, forming blocks of ringed cells.

15. Device, according to claim 14, wherein the storage module is selected from a 51 Vdc storage module and a 400 Vdc storage module.

16. Device, according to claims 14 or 15, wherein the energy storage module comprises a plurality of energy storage modules connected in parallel mode.
